(19) Europäisches Patentamt
European Patent Office
Office européen des brevets

(11) Publication number: **0 430 205 A2**

# (12) EUROPEAN PATENT APPLICATION

(21) Application number: **90122744.7**

(51) Int. Cl.[5]: **C09K 19/34**

(22) Date of filing: **28.11.90**

(30) Priority: **28.11.89 JP 306685/89**

(43) Date of publication of application: **05.06.91 Bulletin 91/23**

(84) Designated Contracting States: **DE FR GB NL Bulletin**

(71) Applicant: **MITSUBISHI PETROCHEMICAL CO., LTD.**
**5-2, Marunouchi 2-chome**
**Chiyoda-ku Tokyo(JP)**

(72) Inventor: **Iwane, Hiroshi, c/o Mitsubishi Petrochemical Co.,Ltd., 3-1 Chuo 8-chome Ami-machi, Inashiki-gun, Ibaraki(JP)**
Inventor: **Inui, Shiroh, c/o Mitsubishi Petrochemical Co.,Ltd., 3-1 Chuo 8-chome Ami-machi, Inashiki-gun, Ibaraki(JP)**
Inventor: **Seo, Shoichi, c/o Mitsubishi Petrochemical Co.,Ltd., 3-1 Chuo 8-chome Ami-machi, Inashiki-gun, Ibaraki(JP)**
Inventor: **Kawano, Shin, c/o Mitsubishi Petrochemical Co.,Ltd., 3-1 Chuo 8-chome Ami-machi, Inashiki-gun, Ibaraki(JP)**
Inventor: **Wada, Noriko, c/o Mitsubishi Petrochemical Co.,Ltd., 3-1 Chuo 8-chome Ami-machi, Inashiki-gun, Ibaraki(JP)**
Inventor: **Saito, Masaki, c/o Mitsubishi Petrochemical Co.,Ltd., 3-1 Chuo 8-chome Ami-machi, Inashiki-gun, Ibaraki(JP)**

(74) Representative: **Hansen, Bernd, Dr. Dipl.-Chem. et al**
**Hoffmann, Eitle & Partner Patent- und Rechtsanwälte Arabellastrasse 4**
**W-8000 München 81(DE)**

## (54) Liquid cristal display device.

(57) Because an optically active compound for use in the present invention shows a very rapid response and also exhibits a ferroelectric smectic liquid phase which takes three stable states of molecular orientation, a liquid crystal display device according to the present invention can display an intermediate tone in addition to "bright" and "dark" states. Therefore, the liquid crystal display device of the present invention is very suitable for display devices, e.g., a liquid crystal TV, and opto-electronic devices, e.g., a light printer and a light valve, in particular for an image display device and a multicolor display device.

EP 0 430 205 A2

# LIQUID CRYSTAL DISPLAY DEVICE

## FIELD OF THE INVENTION

This invention relates to a liquid crystal display device and, more particularly, to a ferroelectric liquid crystal display device capable of displaying an intermediate tone between bright and dark.

## BACKGROUND OF THE INVENTION

Liquid crystal display devices have been widely used as various display devices because of their low-voltage driving properties, low-energy consumption, and capability of reduction in size and thickness.

In recent years, high-speed response liquid crystal display devices using ferroelectric smectic liquid crystals have been laboriously studied. Because ferroelectric smectic liquid crystals undergo spontaneous polarization, they are known to have a large driving force on application of an electric field and exhibit a very rapid response characteristics. Taking advantage of the very rapid response characteristics, application of ferroelectric smectic liquid crystals to display devices, e.g., a liquid crystal TV, and opto-electronic devices, e.g., a light printer and a light valve, has been under study. The ferroelectric liquid crystal phase which has been chiefly proposed to date for use in these elements is a chiral smectic C phase, with which a display can be achieved through a surface stabilized type ferroelectric liquid crystal mode. While, in the surface stabilized type display mode, two states of "bright" and "dark" can be obtained by using two stable states of molecular orientation, it has been difficult to obtain a state of intermediate tone between "bright" and "dark".

Known devices capable of achieving an intermediate tone display by using ferroelectric smectic liquid crystals include those using a composition comprising a tricycle ester compound as disclosed in JP-A-1-213390 (the term "JP-A" as used herein means an "unexamined published Japanese patent application").

## SUMMARY OF THE INVENTION

An object of this invention is to provide a liquid crystal display device which shows a high rate of response by using a material capable of achieving an intermediate tone display which has been difficult with conventional ferroelectric smectic liquid crystals.

Conventional ferroelectric smectic liquid crystals known to be capable of achieving an intermediate tone display have a chemical structure in which the aromatic moiety thereof consists of carbon atoms and hydrogen atoms. Liquid crystal compounds having a nitrogen-containing aromatic heterocyclic ring have not yet been developed.

In order to accomplish the above object of the present invention, the inventors have conducted extensive and intensive investigations and, as a result, reached the present invention.

The present invention relates to a liquid crystal display device using an optically active compound represented by formula (I):

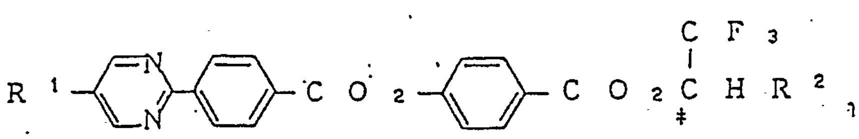

(I)

wherein $R^1$ represents an alkyl or alkoxy group having from 6 to 16 carbon atoms; $R^2$ represents an alkyl group having from 4 to 12 carbon atoms; and * indicates an optically active center.

JP-A-1-139551 discloses the materials used in the present invention but have no disclosure on characteristics as a display device or applicability as a display device for obtaining an intermediate tone.

The optically active compounds which can be used in the present invention exhibit a ferroelectric smectic liquid phase which is different from the known chiral smectic liquid crystal phase exhibiting ferroelectric characteristics.

## DETAILED DESCRIPTION OF THE INVENTION

In formula (I), examples of the alkyl group having from 6 to 16 carbon atoms as represented by $R^1$ include straight chain or branched alkyl groups, e.g., hexyl, heptyl, octyl, nonyl, decyl, undecyl, dodecyl,

tridecyl, tetradecyl, pentadecyl, and hexadecyl groups. Examples of the alkoxy group having from 6 to 16 carbon atoms as represented by $R^1$ include straight chain or branched alkoxy groups, e.g., hexyloxy, heptyloxy, octyloxy, nonyloxy, decyloxy, undecyloxy, dodecyloxy, tridecyloxy, tetradecyloxy, pentadecyloxy, and hexadecyloxy groups. Among them, the alkyl or alkoxy groups having from 10 to 14 carbon atoms are preferred.

Examples of the alkyl group having from 4 to 12 carbon atoms as represented by $R^2$ include straight chain or branched alkyl groups, e.g., butyl, pentyl, hexyl, heptyl, octyl, nonyl, decyl, undecyl, and dodecyl groups. Among them, the alkyl groups having from 6 to 10 carbon atoms are preferred.

The compounds represented by formula (I) can be synthesized according to the reaction scheme illustrated below. In formulae shown, $R^1$ and $R^2$ are as defined above.

Step I:

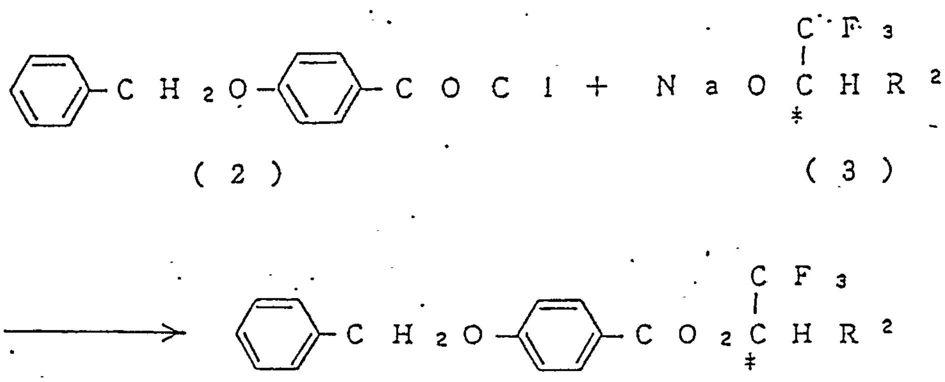

(2) (3)

(4)

Step II:

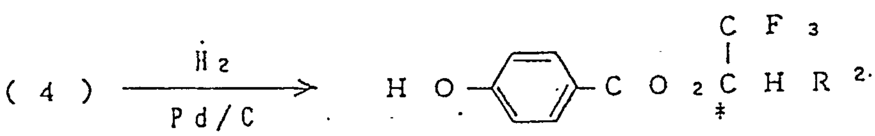


(5)

Step III:

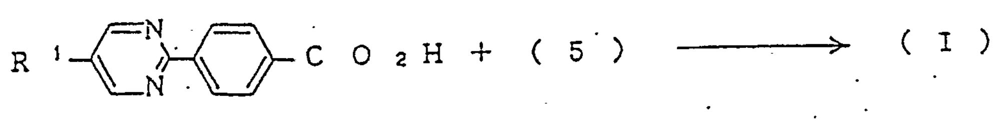

(6)

Step I is carried out in a solvent, e.g., toluene, diethyl ether, and tetrahydrofuran, at a reaction temperature ranging from -20° to 60° C. Step II is a debenzylation reaction and is carried out in a known manner. For example, the reaction can easily be achieved by hydrogenation under normal pressure in a solvent, e.g., ethanol and acetic acid, in the presence of palladium-on-charcoal as a catalyst. Step III can easily be conducted by using dicyclohexylcarbodiimide, etc. as a dehydrating condensing agent in the presence of a solvent, e.g., methylene chloride and chloroform, and an organic base, e.g., N,N-dimethyl-4-aminopyridine, as a catalyst.

A fluorine-containing alcohol which is a precursor of compound (3) used in Step I can be synthesized by a known process described, e.g., in Yukagaku, Vol. 35, p. 608 (1986). The fluorine-containing alcohol is

easily converted to compound (3) by treating with, for example, sodium hydride. On the other hand, compound (6) used in Step III can be synthesized by a known process as described, e.g., in JP-B-55-6632 (the term "JP-B" as used herein means an "examined published Japanese patent application").

Specific examples of the optically active compounds represented by formula (I) are shown below.

1) (S)-[4-(1-Trifluoromethylpentyloxycarbonyl)phenyl]-4-(5-octyloxypyrimidin-2-yl)benzoate
2) (S)-[4-(1-Trifluoromethylpentyloxycarbonyl)phenyl]-4-(5-decyloxypyrimidin-2-yl)benzoate
3) (S)-[4-(1-Trifluoromethylpentyloxycarbonyl)phenyl]-4-(5-dodecyloxypyrimidin-2-yl)benzoate
4) (S)-[4-(1-Trifluoromethylpentyloxycarbonyl)phenyl]-4-(5-tetradecyloxypyrimidin-2-yl)benzoate
5) (S)-[4-(1-Trifluoromethylheptyloxycarbonyl]phenyl]-4-(5-octyloxypyrimidin-2-yl)benzoate
6) (S)-[4-(1-Trifluoromethylheptyloxycarbonyl)phenyl]-4-(5-decyloxypyrimidin-2-yl)benzoate
7) (S)-[4-(1-Trifluoromethylheptyloxycarbonyl)phenyl]-4-(5-dodecyloxypyrimidin-2-yl)benzoate
8) (S)-[4-(1-Trifluoromethylheptyloxycarbonyl)phenyl]-4-(5-tetradecyloxypyrimidin-2-yl)benzoate
9) (R)-[4-(1-Trifluoromethylnonyloxycarbonyl)phenyl]-4-(5-octyloxypyrimidin-2-yl)benzoate
10) (R)-[4-(1-Trifluoromethylnonyloxycarbonyl)phenyl]-4-(5-decyloxypyrimidin-2-yl)benzoate
11) (R)-[4-(1-Trifluoromethylnonyloxycarbonyl)phenyl]-4-(5-dodecyloxypyrimidin-2-yl)benzoate
12) (R)-[4-(1-Trifluoromethylnonyloxycarbonyl)phenyl]-4-(5-tetradecyloxypyrimidin-2-yl)benzoate
13) (S)-[4-(1-Trifluoromethylpentyloxycarbonyl)phenyl]-4-(5-heptylpyrimidin-2-yl)benzoate
14) (S)-[4-(1-Trifluoromethylpentyloxycarbonyl)phenyl]-4-(5-nonylpyrimidin-2-yl)benzoate
15) (S)-[4-(1-Trifluoromethylpentyloxycarbonyl)phenyl]-4-(5-undecylpyrimidin-2-yl)benzoate
16) (S)-[4-(1-Trifluoromethylpentyloxycarbonyl)phenyl]-4-(5-tridecylpyrimidin-2-yl)benzoate
17) (S)-[4-(1-Trifluoromethylpentyloxycarbonyl)phenyl]-4-(5-pentadecylpyrimidin-2-yl)benzoate
18) (S)-[4-(1-Trifluoromethylheptyloxycarbonyl)phenyl]-4-(5-heptylpyrimidin-2-yl)benzoate
19) (S)-[4-(1-Trifluoromethylheptyloxycarbonyl)phenyl]-4-(5-nonylpyrimidin-2-yl)benzoate
20) (S)-[4-(1-Trifluoromethylheptyloxycarbonyl)phenyl]-4-(5-undecylpyrimidin-2-yl)benzoate
21) (S)-[4-(1-Trifluoromethylheptyloxycarbonyl)phenyl]-4-(5-tridecylpyrimidin-2-yl)benzoate
22) (S)-[4-(1-Trifluoromethylheptyloxycarbonyl)phenyl]-4-(5-pentadecylpyrimidin-2-yl)benzoate
23) (R)-[4-(1-Trifluoromethylnonyloxycarbonyl)phenyl]-4-(5-heptylpyrimidin-2-yl)benzoate
24) (R)-[4-(1-Trifluoromethylnonyloxycarbonyl)phenyl]-4-(5-nonylpyrimidin-2-yl)benzoate
25) (R)-[4-(1-Trifluoromethylnonyloxycarbonyl)phenyl]-4-(5-undecylpyrimidin-2-yl)benzoate
26) (R)-[4-(1-Trifluoromethylnonyloxycarbonyl)phenyl]-4-(5-tridecylpyrimidin-2-yl)benzoate
27) (R)-[4-(1-Trifluoromethylnonyloxycarbonyl)phenyl]-4-(5-pentadecylpyrimidin-2-yl)benzoate

The liquid crystal phase exhibited by the compound according to the present invention has characteristics differing from the chiral smectic C phase which has been largely studied to date. It is known that the conventional chiral smectic C phase takes two stable states in a surface stabilized type ferroelectric liquid crystal mode, which can be made use of for making "bright" and "dark" states. In a chiral smectic $C_T$ phase, there is a third stable state in addition to the above two stable states. Since the third stable state exists in the vicinity of a zero voltage, it can be made use of to display an intermediate tone in addition to conventionally obtained "bright" and "dark" states. Accordingly, the liquid crystal display device according to the present invention can achieve three kinds of state with a change of an applied voltage using rectangular wave, etc. Therefore, the liquid crystal display device of the present invention is very suitable for display devices, e.g., a liquid crystal TV, and opto-electronic devices, e.g., a light printer and a light valve, in particular for an image display device and a multicolor display device.

The liquid crystal display device of the present invention can be prepared by assembling a pair of glass substrates each having a transparent electrode with its surface having been subjected to an orientation treatment into a cell with spacers interposed therebetween, and sealing a liquid crystal material into the cell. Any known techniques for preparing liquid crystal devices using conventional liquid crystal compounds exhibiting a chiral smectic C phase can be used. For example, spacers which can be used include alumina beads, glass fiber, a polyester film, etc. Materials which can be subjected to an orientation treatment to form an orientation film include polyvinyl alcohol, polyimide, SiO, $SiO_2$, and the like.

The present invention is now illustrated in greater detail by way of Synthesis Example and Examples, but it should be understood that the present invention is not deemed to be limited thereto.

In the Examples, all the percents are by weight unless otherwise indicated. Measurements of phase transition temperatures and identification of phases of the liquid crystal compound obtained were conducted by means of a differential scanning calorimetry (DSC) and a polarizing microscope. "Cry" means a crystalline phase; "$SmC_T^*$" a chiral smectic $C_T$ phase; "SmA" a smectic A phase; and "Iso" an isotropic phase.

SYNTHESIS EXAMPLE

(R)-[4-(1-Trifluoromethylnonyloxycarbonyl)phenyl]-4-(5-dodecyloxypyrimidin-2-yl)benzoate

1) Preparation of (R)-(1-Trifluoromethylnonyl)-4-benzyloxybenzoate:

4-Benzyloxybenzoic acid (684 mg, 3.0 mmol) and 10 mℓ of thionyl chloride were heated at reflux for 3 hours, and the excess thionyl chloride was removed by distillation under reduced pressure to obtain 4-benzyloxybenzoic acid chloride. The resulting compound was used in the next step as dissolved in tetrahydrofuran without being purified.

Separately, 636 mg (3.0 mmol) of (R)-1,1,1-trifluoro-2-decanol was dissolved in 15 mℓ of tetrahydrofuran, and 132 mg (purity: 60%, 3.3 mmol) of sodium hydride was added to the solution. The resulting tetrahydrofuran solution of an alcoholate was added dropwise to the above prepared tetrahydrofuran solution of the acid chloride at room temperature over about 30 minutes with stirring. After stirring was continued for an additional period of 12 hours, 60 mℓ of water was added to the reaction mixture, and the reaction mixture was extracted with 90 mℓ of methylene chloride. The organic layer was washed successively with a 5% aqueous solution of sodium hydrogencarbonate and water and dried over anhydrous magnesium sulfate. The desiccant was removed by filtration, and the methylene chloride was removed by distillation. The residue was purified by silica gel column chromatography to obtain 810 mg (1.92 mmol) of (R)-(1-trifluoromethylnonyl)-4-benzyloxybenzoate.

2) Preparation of (R)-(1-Trifluoromethylnonyl)-4-hydroxybenzoate:

In 30 mℓ of acetic acid was dissolved 720 mg (1.70 mmol) of the (R)-(1-trifluoromethylnonyl)-4-benzyloxybenzoate obtained in 1) above, and the solution was allowed by react in a hydrogen atmosphere in the presence of 180 mg of 5% palladium-on-charcoal at room temperature for 5 hours. The catalyst was removed by filtration, and the solvent was removed by distillation under reduced pressure. The residue was purified by silica gel column chromatography to obtain 525 mg (1.58 mmol) of (R)-(1-trifluoromethylnonyl)-4-hydroxybenzoate as an oily substance.

3) Preparation of (R)-[4-(1-Trifluoromethylnonyloxycarbonyl)phenyl]-4-(5-dodecyloxypyrimidin-2-yl)benzoate

In 10 mℓ of methylene chloride were dissolved 160 mg (0.48 mmol) of the (R)-(1-trifluoromethyl)-4-hydroxybenzoate obtained in 2) above, 203 mg (0.53 mmol) of (5-dodecyloxypyrimidin-2-yl)benzoic acid, and 32 mg (0.26 mmol) of N,N-dimethyl-4-aminopyridine at room temperature, and 129 mg (0.63 mmol) of dicyclohexylcarbodiimide was added thereto, followed by allowing the mixture to react at room temperature for 10 hours.

After completion of the reaction, the precipitated solid matter was separated by filtration, washed successively with water, a 5% aqueous solution of acetic acid, and water and dried over anhydrous magnesium sulfate. The desiccant was removed by filtration, and the solvent was removed by distillation. The residue was purified by silica gel column chromatography and recrystallized from hexane to obtain 148 mg (0.21 mmol) of the titled compound.

Phase Transition Temperatures (°C):

$$\text{Cry.} \underset{25}{\overset{4.9}{\rightleftarrows}} \text{SmC}^* \underset{86}{\overset{88}{\rightleftarrows}} \text{SmA} \underset{91}{\overset{93}{\rightleftarrows}} \text{Iso.}$$

The value of spontaneous polarization of the resulting compound at 80°C was found to be 250 $nC/cm^2$.

## EXAMPLE 1

A pair of glass substrates each having a polyimide coating which had been subjected to a rubbing treatment on a transparent electrode were assembled with spacers to prepare a liquid crystal cell having a cell thickness of 3 µm in such a manner that the directions of rubbing of the polyimide coatings were in parallel with each other. The compound prepared in the Synthesis Example was sealed into the cell, and the cell was interposed between a pair of crossing polarizing sheets to obtain a liquid crystal element. When a voltage of ±30 V was applied thereto at 80°C, a very rapid response having a response time of 90 µsec was obtained.

EXAMPLE 2

A triangular wave voltage of ±20 V was applied to the liquid crystal cell prepared in Example 1 at 80° C. Changes among three states including an intermediate tone in the vicinity of a zero voltage in addition to bright and dark states.

While the invention has been described in detail and with reference to specific examples thereof, it will be apparent to one skilled in the art that various changes and modifications can be made therein without departing from the spirit and scope thereof.

## Claims

1. A liquid crystal display device capable of displaying an intermediate tone using an optically active compound represented by formula (I):

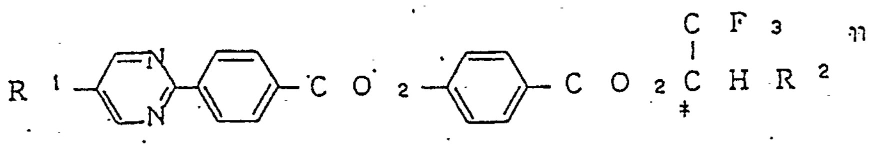

(I)

wherein $R^1$ represents an alkyl or alkoxy group having from 6 to 16 carbon atoms; $R^2$ represents an alkyl group having from 4 to 12 carbon atoms; and * indicates an optically active center.

2. A liquid crystal display device as claimed in Claim 1, wherein $R^1$ represents an alkyl or alkoxy group having from 10 to 14 carbon atoms.

3. A liquid crystal display device as claimed in Claim 1, wherein $R^2$ represents an alkyl group having from 6 to 10 carbon atoms.

4. A method of displaying bright, dark and an intermediate tone with changes in intensity of an applied electric field using a liquid crystal display device using an optically active compound represented by formula (I):

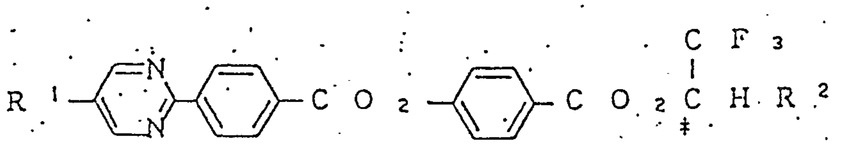

(I)

wherein $R^1$ represents an alkyl or alkoxy group having from 6 to 16 carbon atoms; $R^2$ represents an alkyl group having from 4 to 12 carbon atoms; and * indicates an optically active center.